# EUROPÄISCHE PATENTANMELDUNG

(11) **EP 2 161 463 A1**
(43) Veröffentlichungstag der Anmeldung: **10.03.2010**
(21) Anmeldenummer: 08405217.4
(22) Anmeldetag: 08.09.2008
(51) Int. Cl.: F16C 19/10, F16C 19/30, F16C 33/38, F16C 33/46

(54) **Axiallager**

(71) Anmelder: Ekko Technik AG, 2543 Lengnau (CH)
(72) Erfinder: Stohler, Martin, 4512 Bellach (CH)
(74) Vertreter: Rüfenacht, Philipp Michael

(57) **Zusammenfassung**

Die Erfindung betrifft ein Axiallager (10;20;30), das grossen Belastungen, insbesondere torkelnden Achsenbewegungen stand hält. Das Axiallager (10;20;30) umfasst mindestens zwei Lagerscheiben (11,12;21,22;31,32) mit zwischen diesen angeordneten Wälzkörpern (14;24;34), welche durch ein Führungselement (13;23;33) geführt sind, wobei die beiden Lagerscheiben (11,12;21,22;31,32) miteinander unverlierbar gekoppelt sind, sodass das Axiallager (10;20;30) eine Baueinheit bildet. Dabei wird die Berührungsfläche zwischen den Lagerscheiben (11,12;21,22;31,32) und den Wälzkörpern (14;24;34) vergrössert, indem einerseits zylinderförmige Walzen (14;24) eingesetzt werden oder aber dass die Wälzkörper (14;24;34), seien dies Kugeln (34) oder zylinderförmige Walzen (14;24), in mindestens zwei Reihen angeordnet werden. Dadurch werden axiale Kräfte besser auf die Wälzkörper (14;24;34) verteilt und radiale Kräfte werden, da die Wälzkörper (14;24;34) geführt werden, ebenfalls besser aufgefangen.

## Beschreibung

### Technisches Gebiet

Die Erfindung betrifft ein Axiallager mit mindestens zwei Lagerscheiben und mit zwischen diesen angeordneten Wälzkörpern, welche durch ein Führungselement geführt sind, wobei die beiden Lagerscheiben miteinander unverlierbar gekoppelt sind, so dass das Axiallager eine Baueinheit bildet

### Stand der Technik

Aus der DE 90 11 029 U1 (Wolf, 1990) ist ein Kugellager bekannt, bei welchem die beiden Lagerteile für die Kugeln aus umgeformtem Metall bestehen und über sog. Vorsprünge zusammengehalten werden, so dass die Teile des Kugellagers zu einer Einheit zusammengehalten werden.

Im Handel erhältlich sind auch Walzenlager, bei denen die zylindrischen (leicht konischen) Wälzkörper auf einer zur Achse des Axialdrehlagers schräg stehenden (konischen) Lauffläche ruhen. Diese Walzen besitzen aber kein Gehäuse und werden daher seitlich nicht geführt, so dass die seitlichen Kräfte direkt auf den Kugelhalter abgeleitet werden.

Es hat sich gezeigt, dass bei grossen Kräften, welche z. B. durch torkelnde Achsen der aufeinander gelagerten Teile mit verursacht werden, die bekannten Lager bersten. Zudem haben Wälzkörper, insbesondere zylinderförmige Walzen, unter Belastung, insbesondere auf Grund von radialen Kräften, die Tendenz nach aussen zu wandern. Vor allem bei torkelnder Bewegung der Achse kann sich dies sehr nachteilig auswirken.

### Darstellung der Erfindung

Aufgabe der Erfindung ist es, ein dem eingangs genannten technischen Gebiet zugehörende Axiallager zu schaffen, welche hoher torkelnder Belastung stand hält.

Die Lösung der Aufgabe ist durch die Merkmale des Anspruchs 1 definiert. Gemäss der Erfindung umfasst ein Axiallager mindestens zwei Lagerscheiben und Wälzkörper, die zwischen den Lagerscheiben angeordnet sind. Dabei werden die Wälzkörper durch ein Führungselement geführt. Die beiden Lagerscheiben sind unverlierbar gekoppelt, so dass das Axiallager eine Baueinheit bildet. Die Wälzkörper können sowohl im Wesentlichen als zylindrische Walzen ausgebildet sein, als auch in zwei Reihen angeordnet sein.

Die Erfindung basiert auf der Erkenntnis, dass eine ungenügend grosse Berührungsfläche sowie ungenügend geführte Wälzkörper einer hohen Belastung, insbesondere einer torkelnder Belastung nicht standhält. Sowohl die zylindrischen Walzen als auch das Anordnen der Wälzkörper in zwei Reihen vergrössert die Berührungsfläche zwischen den Lagerscheiben und den Wälzkörper. Dies bringt den Vorteil, dass unter Belastung die auftretenden axialen Kräfte besser verteilt werden. Dadurch kann das Axiallager bei gleichen Dimensionen einer grösseren Belastung ausgesetzt werden.

Zudem werden durch die Führung der Wälzkörper, seien es dies Walzen oder Kugeln, diese immer in einer optimalen Laufbahn gehalten. Dies hat den Vorteil, dass die Wälzkörper sich nicht verschieben, insbesondere nicht nach aussen wandern. Zudem ermöglicht das Führen der Wälzkörper in festen Laufbahnen, dass die Wälzkörper in mehreren Laufbahnen angeordnet werden können. Dies hat, wie oben schon erwähnt den Vorteil, dass die gesamte Berührungsfläche zwischen den Lagerscheiben und den Wälzkörper vergrössert werden kann.

Dass das Axiallager als eine ganze Baueinheit geliefert werden kann, hat den Vorteil, dass ein sauberes und korrektes Zusammensetzten des Axiallagers schon durch den Hersteller ermöglicht wird. Somit kann die Möglichkeit eines fehlerhaften Zusammensetzens durch einen Benutzer verringert werden. Zudem wirkt sich das Axiallager als Baueinheit vorteilhaft auf die Lagerung, den Transport sowie die Montage des Axiallagers aus. Dies vor allem dadurch, dass die Anzahl Einzelteile verringert wird.

Bei der Variante mit der zylindrischen Walzenform, wird die Berührungsfläche dadurch erhöht, dass die Lagerscheiben nun auf Linien statt auf Punkten auf den Wälzkörper aufliegen. Indem die Wälzkörper in einem Führungselement geführt werden, können zusätzliche radiale Kräfte aufgenommen werden, da die Wälzkörper daran gehindert werden, sich nach aussen zu verschieben.

Bei der Anordnung der Wälzkörper, seien dies zylinderförmige Walzen oder Kugeln in zwei Reihen, wird die Berührungsfläche dadurch vergrössert, dass eine grössere Anzahl Wälzkörper verpackt werden, kann als dies bei nur einer Reihe der Fall ist. Dadurch wird eine totale Kraft, die auf das Axiallager wirkt, auf eine grössere Anzahl Wälzkörper verteilt, wobei die axiale Kraft pro Wälzkörper verringert wird.

Bevorzugt sind die Lagerscheiben aus einem kaltverformten Stahlband gebildet. Dies hat den Vorteil, dass das Verfahren zur Herstellung des Axiallagers sich vereinfacht.

Insbesondere bei der Variante, bei der die Wälzkörper in zwei oder mehr Reihen angeordnet sind, beschränkt sich der Aufwand nur in der Herstellung eines Prägestempels.

Alternativ sind andere Materialien als Stahlband denkbar. Zum Beispiel können die Lagerscheiben aus Stahlblech gefräst oder gelasert werden. Je nach Materialeigenschaft kann eine alternative Vorrichtung, zum Beispiel eine Klemmvorrichtung, zum Zusammenhalten des Axiallagers gewählt werden. Zudem können die Lagerscheiben anstatt kaltgeformt zum Beispiel auch gedreht oder gefräst werden. Es ist auch nicht ausgeschlossen, dass die Lagerscheiben durch ein spannendes Verfahren hergestellt werden, wenn dies im Einzelfall nötig erscheint.

Mit Vorteil führt das Führungselement die Wälzkörper zumindest seitlich des Axiallagers. Das Führungselement ist so angeordnet und ausgebildet, dass auch unter einer hohen Last keine Kraft auf dieses ausgeübt wird. Bei einer Rotation des Axiallagers werden die Wälzkörper durch das Führungselement in einer Kreisbahn bewegt. Dies garantiert eine störungsfreie Bewegung, ohne dass sich die Wälzkörper dabei berühren

Alternativ kann das Führungselement auch an zusätzlichen Seiten, zum Beispiel peripherieseitig zwischen den Walzkörpern angebracht werden, so dass die Walzkörper dadurch in der Bahn gehalten werden.

Mit Vorteil bilden die Lagerscheiben eine senkrecht zu einer Drehachse des Axiallagers stehende Lagerfläche. Dies hat den Vorteil, dass die axialen Kräfte gut von den Lagerscheiben auf die Wälzkörper übertragen werden können.

Das Prinzip der Erfindung ist aber auch auf Lager mit konischen Laufflächen anwendbar. Das heisst, dass die durch die Lagerscheiben gebildete Lagerfläche schräg zur Drehachse des Axiallagers ausgerichtet sind.

Mit Vorteil hat Stahlband einen Dicke von maximal 1 mm. Dies hat den Vorteil, dass die Lagerscheiben kaltgeprägt werden können.

Alternative sind auch dickere Stahlbänder möglich, solange der Platzgebrauch dies zulässt. Anstelle des Kaltprägens können die Lagerscheiben zum Beispiel gefräst oder gedreht werden.

Mit Vorteil werden die Lagerscheiben durch Rückhalter, welche am Führungselement angeformt sind, zusammen gehalten. Dies hat den Vorteil, dass die Lagerscheiben durch eine einfache Konstruktion zusammengehalten werden und somit einfach in der Anwendung sind. Der Anwender muss nicht die Einzelteile zusammensetzen, wenn er das Lager in ein Gerät einbaut. Es können auch Fehler des Anwenders beim Zusammensetzen vermieden werden, so dass eine gleichbleibend hohe Qualität der Lager gewährleistet ist.

Alternativ können die Lagerscheiben auch durch Rückhalter zusammengehalten werden, die an einem oder an beiden Lagerscheiben angeformt sind. Insbesondere können die Lagerscheiben selber mit Vorsprüngen ausgebildet werden, die Schnappverschlüsse bilden.

Mit Vorteil wird ein eingangs beschriebenes Axiallager bei einer Bremszange für Strassenfahrzeuge eingesetzt. Dies hat den Vorteil, dass die beim Bremsvorgang entstehenden axialen Kräfte, insbesondere durch torkelnde Achsen verursacht, aufgefangen werden. Somit kann die Bremszange höherer Belastung ausgesetzt werden.

Es gibt natürlich auch viele andere Verwendungszwecke des Axiallagers, insbesondere dort, wo grosse Drehmomente und hohe axiale und mittlere radiale Kräfte auftreten. Dies ist zum Beispiel allgemein im Fahrzeugbau ausserhalb der Motorenteile der Fall.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

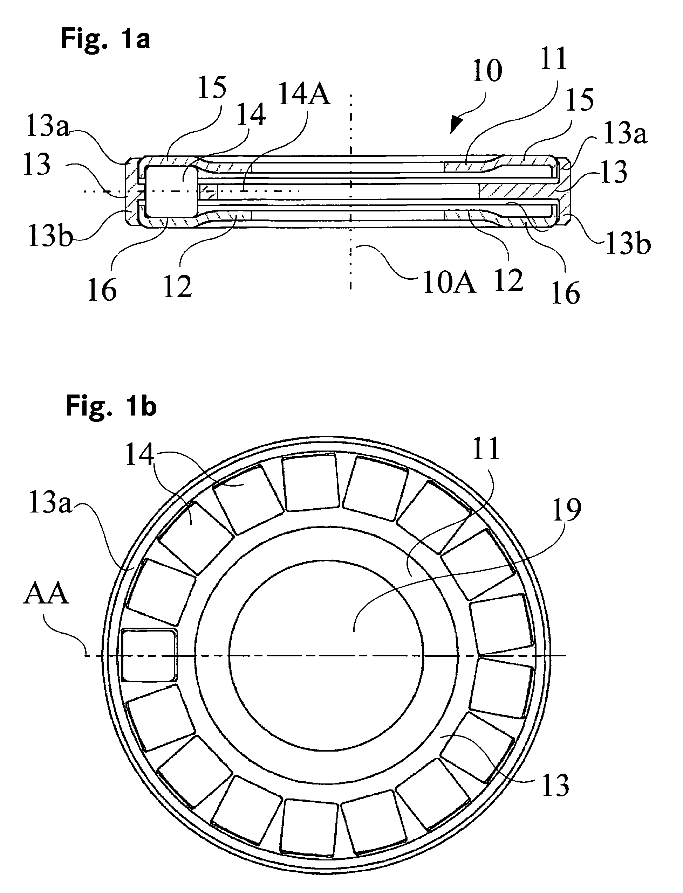

- Fig. 1a a: einen Querschnitt durch eine erste Ausführungsform eines Axiallagers

- Fig. 1 b: eine Draufsicht auf ein Axiallagers gemäss Figur 1a;
- Fig. 2a: einen Querschnitt durch eine zweite Ausführungsform eines Axiallagers;
- Fig. 2b: eine Draufsicht auf ein Axiallagers gemäss Figur 2a;
- Fig. 3a: einen Querschnitt durch eine dritte Ausführungsform eines Axiallagers;
- Fig. 3b: eine Draufsicht auf ein Axiallager gemäss Figur 3a; und
- Fig. 4: eine Bremszange mit eingebautem Axiallager.

Grundsätzlich sind in den Figuren gleiche Teile mit gleichen Bezugszeichen versehen.

### Wege zur Ausführung der Erfindung

Die Figur 1a zeigt einen Querschnitt entlang der Achse AA der Figur 1b. Das in Figur 1a dargestellte Axiallager 10, mit einer Drehachse 10A weist eine erste Lagerscheibe 11, eine dieser gegenüberliegende zweite Lagerscheibe 12 sowie ein zwischen diesen angeordnetes Führungselement 13 auf, wobei das Führungselement 13 der Führung der zwischen diesen angeordneten, hier als zylinderförmige Walzen 14 ausgebildete Walzkörper dient. Die Walzen 14 sind in entsprechenden Ausnehmungen im Führungselement 13 angeordnet und laufen in Führungsrinnen 15 und 16, die in den Lagerscheiben 11 und 12 ausgeformt wurden. Dabei zeigen Rotationsachsen 14A der Walzen 14 radialförmig zur Drehachse 10A des Axiallagers 10.

Vom Führungselement 13 entspringen in entgegen gesetzten Richtungen vorstehende Vorsprünge 13a und 13b, die die Lagerscheiben 11 und 12 radial umgreifen und die auch die einander abgewandten Oberseiten der gegenüberliegenden Lagerscheiben 11 respektive 12 überragen. Die Vorsprünge 13a und 13b sind so ausgebildet und dimensioniert, dass die Lagerscheiben 11 und 12 bei axialer Belastung frei drehbar sind und ohne Berührung des Führungselements 13 rotieren können.

Zur Montage ist das Axiallager 10 mit einer Mittelausnehmung 19 versehen, deren Durchmesser auf den jeweiligen Verwendungsfall abgestimmt ist.

Figur 1b zeigt eine Draufsicht auf das in Figur 1a wiedergegebene Ausführungsbeispiel. Der die Oberseite der Lagerscheibe 12 überragende Bereich des Vorsprungs 13b ist hier durchgehend ausgebildet. Es ist jedoch auch möglich, lediglich einzelne, Kreisbogenelemente bildende Bereiche vorzusehen, die in einem Abstand zueinander angeordnet sind. Dabei ist es auch möglich, dass die Vorsprungsbereiche, die die Oberseite der Lagerscheibe 11 übergreifen, abwechseln mit den Bereichen, die die Oberseite der Lagerscheibe 12 überragen. Auf diese Weise alternieren die Vorsprünge 13a und 13b. Grundsätzlich kann die Zahl der Vorsprünge je nach Anwendung bis auf ein bis zwei Vorsprünge reduziert werden.

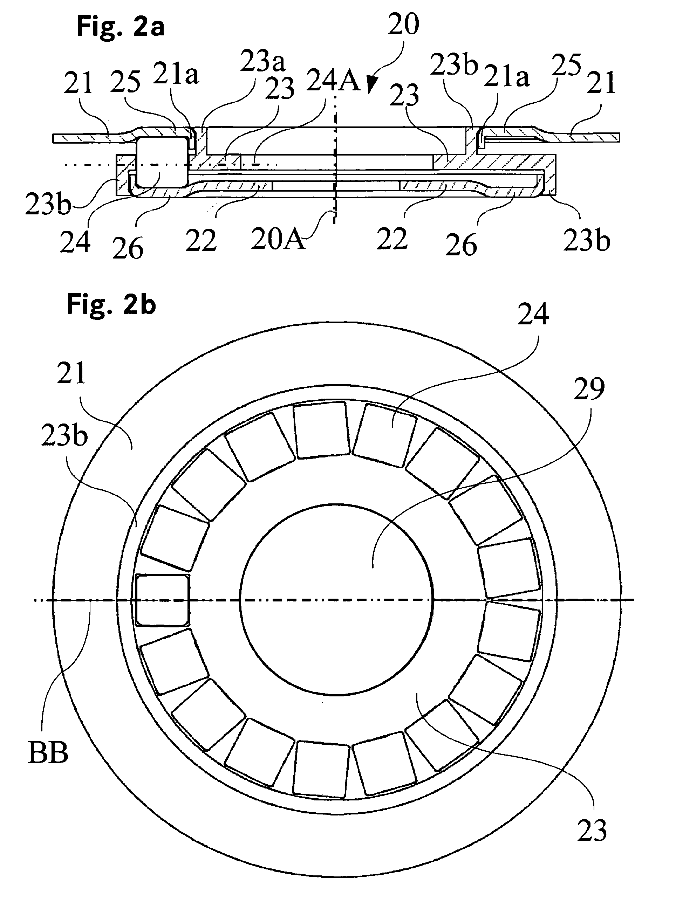

Die Figur 2a zeigt einen Querschnitt entlang der Achse BB der Figur 2b. Das in Figur 2a dargestellte Axiallager 20 mit einer Drehachse 20A weist eine erste Lagerscheibe 21, eine dieser gegenüberliegende zweite Lagerscheibe 22 sowie ein zwischen diesen angeordnetes Führungselement 23 auf. Dieses Führungselement 23 dient der Führung der zwischen diesen angeordneten, hier als zylinderförmige Walzen 24 ausgebildete Walzkörper. Die Walzen 24 sind in entsprechenden Ausnehmungen im Führungselement 23 angeordnet und laufen in Führungsrinnen 25 und 26, die in den Lagerscheiben 21 und 22 ausgeformt wurden. Dabei zeigen Rotationsachsen 24A der Walzen 24 radialförmig zur Drehachse 20A des Axiallagers 20. Zur Montage ist das Axiallager 20 mit einer Mittelausnehmung 29 versehen, deren Durchmesser auf den jeweiligen Verwendungsfall abgestimmt ist.

Vom Führungselement 23 entspringen in entgegen gesetzten Richtungen vorstehende Vorsprünge 23a und 23b, die die Lagerscheiben 21 und 22 radial umgreifen. Dabei greift der Vorsprung 23a die erste Lagerscheibe 21 über einen Innenrand 21a auf der Seite der Mittelausnehmung 29 und der Vorsprung 23b greift die zweite Lagerscheibe 22 über einen Aussenrand 22a. Die Vorsprünge 23a und 23b sind so ausgebildet und dimensioniert, dass die Lagerscheiben 21 und 22 bei axialer Belastung frei drehbar sind und ohne eine Berührung des Führungselements 23 rotieren können.

Zur Montage ist das Axiallager 20 mit einer Mittelausnehmung 29 versehen, deren Durchmesser auf den jeweiligen Verwendungsfall abgestimmt ist. So zum Beispiel auf einen drehbaren Bolzen eines Bremslagers, der durch die Mittelausnehmung 29 hindurch geht, wobei der Bolzen eine Verdickung aufweist, die auf der einen Lagerscheibe 21 oder 22 aufliegt.

Figur 2b zeigt eine Draufsicht auf das in Figur 2a wiedergegebene Ausführungsbeispiel. Ein die Oberseite der Lagerscheibe 22 überragender Bereich des Vorsprungs 23b ist hier durchgehend ausgebildet. Es ist jedoch auch möglich, lediglich einzelne, Kreisbogenelemente bildende Bereiche vorzusehen, die in einem Abstand zueinander angeordnet sind. Dabei ist es auch möglich, dass die Vorsprungsbereiche, die den Aussenrand 22a der Lagerscheibe 22 übergreifen, abwechseln mit den Bereichen, die den innenrand 21a der Lagerscheibe 21 überragen. Auf diese Weise alternieren die Vorsprünge 23a und 23b. Grundsätzlich kann die Zahl der Vorsprünge je nach Anwendung bis auf ein bis zwei Vorsprünge reduziert werden.

Beim Axiallager 20 wirkt die Kraft einer Last auf die Lagerscheibe 21 auf eine ringförmige Auflagefläche, welche ausserhalb einer kreisförmigen Laufbahn der Walzen 24 ist. Dies im Unterschied zum Axiallager 10, bei dem die Kraft innerhalb der kreisförmigen Laufbahn der Walzen 24 ansetzt.

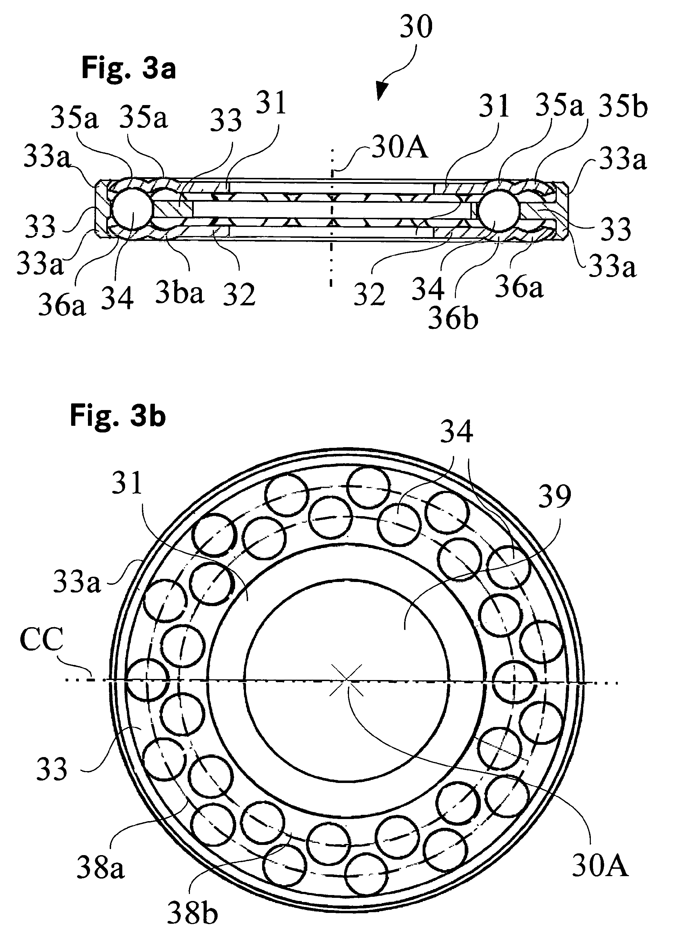

Die Figur 3a zeigt einen Querschnitt entlang der Achse CC der Figur 3b. Das in Figur 3a dargestellte Axiallager 30, mit einer Drehachse 30A weist analog zum Axiallager 10 eine erste Lagerscheibe 31, eine dieser gegenüberliegende zweite Lagerscheibe 32 sowie ein zwischen diesen angeordnetes Führungselement 33 auf. Das Führungselement 33 dient der Führung der zwischen den Lagerscheiben 31 und 32 angeordneten, hier nun als Kugel 34 ausgebildeten Walzkörper. Die Kugeln 34 sind in entsprechenden Ausnehmungen im Führungselement 33 angeordnet, wobei sich die Kugeln 34, wie in Figur 3a ersichtlich ist auf zwei Kreise 38a und 38b mit zwei unterschiedlichen Radien von der Drehachse 30A verteilen. Die Kugeln 34 befinden sich dabei in je zwei Führungsrinnen 35a, 35b, 36a und 36b, die in den Lagerscheiben 31 respektive 32 ausgeformt wurden.

In gleicher Weise wie beim Axiallager 10 entspringen vom Führungselement 33 in entgegen gesetzten Richtungen vorstehende Vorsprünge 33a und 33b, die die Lagerscheiben 31 und 32 radial umgreifen und die auch die einander abgewandten Oberseiten der gegenüberliegenden Lagerscheiben 31 respektive 32 überragen. Die Vorsprünge 33a und 33b sind so ausgebildet und dimensioniert, dass die Lagerscheiben 31 und 32 bei axialer Belastung frei drehbar sind und ohne eine Berührung des Führungselements 33 rotieren können.

Zur Montage ist das Axiallager 30 mit einer Mittelausnehmung 39 versehen, deren Durchmesser auf den jeweiligen Verwendungsfall abgestimmt ist.

Figur 3b zeigt eine Draufsicht auf das in Figur 3a wiedergegebene Ausführungsbeispiel. Der die Oberseite der Lagerscheibe 32 überragende Bereich des Vorsprungs 33b ist hier durchgehend ausgebildet. Es ist jedoch auch möglich, lediglich einzelne, Kreisbogenelemente bildende Bereiche vorzusehen, die in einem Abstand zueinander angeordnet sind. Dabei ist es auch möglich, dass die Vorsprungsbereiche, die die Oberseite der Lagerscheibe 31 übergreifen, abwechseln mit den Bereichen, die die Oberseite der Lagerscheibe 32 überragen. Auf diese Weise alternieren die Vorsprünge 33a und 33b. Grundsätzlich kann die Zahl der Vorsprünge je nach Anwendung bis auf ein bis zwei Vorsprünge reduziert werden.

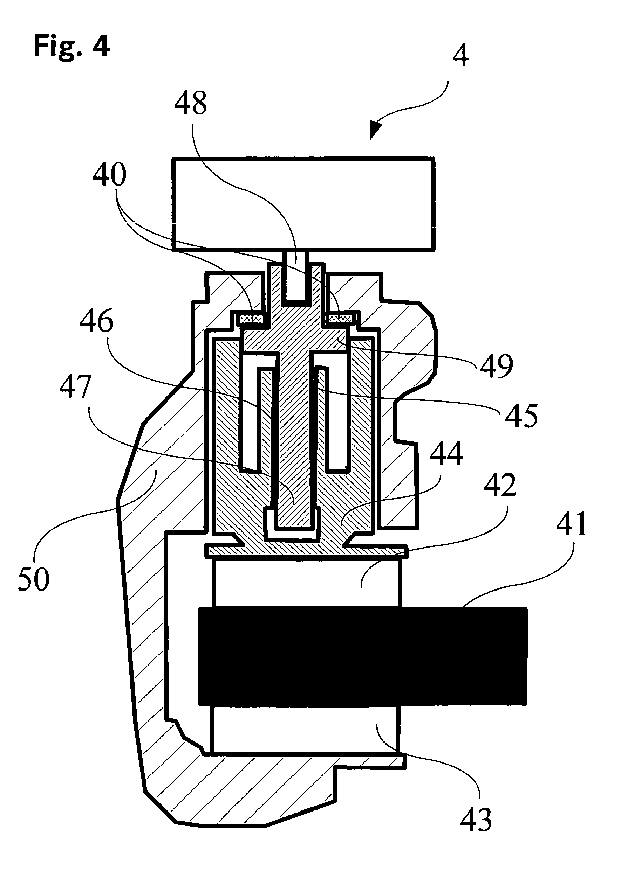

Die Figur 4 zeigt ein Axiallager 40, das in einer Bremszange 4 eingesetzt ist. Dabei entspricht das Axiallager 40 einer der drei Axiallager 10, 20 oder 30. Eine zu bremsende Bremsscheibe 41, in der Figur 4 als Rechteck gezeichnet, wird von zwei gegenüberliegenden ersten und zweiten Bremsklötzen 42 und 43 zusammen gedrückt. Dabei wird der Bremsdruck auf die Bremsscheibe 41 dadurch gebildet, dass der erste Bremsklotz 42 mit einem Hohlzylinder 44 verbunden ist, an dessen Innenseite ein Gewinde 45 vorhanden ist. In das Gewinde 45 passt ein ebenfalls mit einem Gewinde 46 versehener Bolzen 47, der wiederum mittels einer Kupplung 48 mit einem Drehaktuator (nicht gezeichnet) verbunden ist. Der Bolzen 47 besitzt an einem Ende, das auf der anderen Seite des ersten Bremsklotzes 42 liegt, eine Verdickung 49. Auf dieser Verdickung 49 liegt das Axiallager 40, durch deren Mittelausnehmung die Kupplung 48 auf den Bolzen 47 zugreift, wobei eine Lagerscheibe des Axiallagers 40 den Bolzen 47 berührt. Eine zweite Lagerscheibe ist mit einem Bremsarm 50 verbunden, der mit dem zweiten Bremsklotz 43 verbunden ist. Das Axiallager 40 ermöglicht eine axiale Kraftübertragung vom drehbaren Bolzen 47 auf die starre Bremszange.

Wird der Bolzen 47 durch den Aktuator gedreht, so schieben sich der Bolzen 47 sowie der Hohlzylinder 46 auseinander. Dadurch drückt der Hohlzylinder 46 auf den ersten Bremsklotz 41. Zugleich drückt der Bolzen 47 via Axiallager 40 und Bremsarm 50 auf den zweiten Bremsblock 43. Dadurch wird ein Druck von beiden Seiten auf die Bremsscheibe 41 ausgeübt. Offensichtlich wirkt der gleiche Druck auch auf das Axiallager 40. Falls auf Grund des Reibungswiderstandes die Bremsscheibe 41 ruckartig gebremst wird, überträgt sich eine Torkelbewegung mittels Hohlzylinder 44 und Bolzen 47 auf das Axiallager 40. Auf Grund der erfindungsgemässen Ausführung des Axiallagers 40 können solche Torkelbewegungen auch bei grossen Axialkräften aufgefangen werden.

Der Einsatz des Axiallagers in einer Bremszange zeigt eine mögliche Anwendung. Weitere mögliche Anwendungen eines Axiallagers sind zum Beispiel in Lenkungen von Fahrzeugen, bei Absperrventilen, Kreiselrechen oder Roboteranlagen.

Es ist ebenfalls möglich, insofern genügend Platz vorhanden ist, die Wälzkörper in mehr als zwei Reihen anzuordnen. Dabei spielt es keine Rolle ob es sich bei den Wälzkörpern um kugelförmige, zylinderförmige oder konische Wälzkörper handelt.

Die Führungselemente tragen unter Belastung keine Last. Sie dienen lediglich zum zusammenhalten. Meistens sind diese Führungselemente aus Kunststoff angefertigt.

Je nach Anwendung können der Radius der Mittelausnehmung sowie die Aussenradien der Lagerscheiben unterschiedliche Dimensionen annehmen. Mögliche Radien sind zum Beispiel circa 15 mm für die Mittelausnehmung sowie 35 mm für den Aussenradius der Lagerscheiben. In gleicher Weise können die Dimensionen der Wälzkörper für verschiedene Ausführungsformen unterschiedlich sein. Mögliche Durchmesser sind zum Beispiel 3 mm für die Kugel oder 4.1 mm für die zylinderförmigen Walzen. Die Walzen können dabei eine Höhe von 4.2 mm aufweisen.

Die beschriebenen Axiallager können axial eine dynamische Tragkraft im Bereich von mehreren 20 kN aufnehmen. Die radialen Kräfte befinden sich im Prozentbereich der axialen Tragkraft.

Als Schmierung kommen verschiedene Schmiermittel in Frage. So kann zum Beispiel für Anwendungen mit hohen Temperaturen bis zu 200°C ein Zweikomponentenschmiermittel mit einer Temperaturbeständigkeit bis zu 250°C verwendet werden.

Die in den Ausführungsformen dargestellten zylindrischen Walzen können ebenfalls leicht konisch (kegelstumpfförmig) oder auch tonnenförmig sein. Allgemein ist jede rotationssymmetrische Form denkbar. Dabei müssen die Führungsrinnen der Lagerscheiben entsprechend der Form der Wälzkörper angepasst werden.

Die Ausführungsform der Lagerscheibe 21, wie sie beim Axiallager 20 dargestellt wurde, lässt sich ebenfalls auch auf das Axiallager 30 übertragen. Das heisst die Lagerscheibe 31 des Axiallagers 30 kann analog wie die Lagerscheibe 21 so ausgebildet sein, dass die eine Last auf eine Auflagefläche wirkt, welche ausserhalb einer Laufbahn der Kugeln 34 sich befindet,.

Zusammenfassend ist festzustellen, dass ein Axiallager geschaffen wurde, das grossen Belastungen, insbesondere torkelnden Achsenbewegungen stand hält.

## Patentansprüche

1. Axiallager (10; 20; 30) mit mindestens zwei Lagerscheiben (11, 12; 21 ,22; 31, 32) und mit zwischen diesen angeordneten Wälzkörpern (14; 24; 34), welche durch ein Führungselement (13; 23; 33) geführt sind, wobei die beiden Lagerscheiben (11, 12;21 ,22; 31, 32) miteinander unverlierbar gekoppelt sind, so dass das Axiallager (10; 20; 30) eine Baueinheit bildet, **dadurch gekennzeichnet, dass** die Wälzkörper (14; 24; 34) als im Wesentlichen zylindrische Walzen (14; 24) ausgebildet sind oder dass sie in zwei Reihen angeordnet sind.

2. Axiallager (10; 20; 30) nach Anspruch 1, **dadurch gekennzeichnet, dass** die Lagerscheiben aus einem (11, 12; 21 ,22; 31, 32) kalt verformten Stahlband gebildet sind.

3. Axiallager (10; 20; 30) nach Anspruch 1 oder 2, **dadurch gekennzeichnet, dass** das Führungselement (13; 23; 33) die Wälzkörper (14; 24; 34) zumindest seitlich des Axiallagers (10; 20; 30) führt.

4. Axiallager (10; 20; 30) nach einem der Ansprüche 1 bis 3, **dadurch gekennzeichnet, dass** die Lagerscheiben (11, 12; 21 ,22; 31, 32) eine senkrecht zu einer Drehachse (10A; 20A; 30A) des Axiallagers stehende Lagerfläche bilden.

5. Axiallager (10; 20; 30) nach Anspruch 2, **dadurch gekennzeichnet, dass** das Stahlband eine Dicke von maximal 1 mm hat.

6. Axiallager (10; 20; 30) nach Anspruch 1, **dadurch gekennzeichnet, dass** die Lagerscheiben (11, 12; 21 ,22; 31, 32) durch Rückhalter, welche am Führungselement (13; 23; 33) angeformt sind, zusammen gehalten werden.

7. Bremszange (40) für ein Strassenfahrzeug, **dadurch gekennzeichnet, dass** sie ein Axiallager (10; 20; 30) nach einem der Ansprüche 1 bis 6 aufweist.
